# FASCICULE DE BREVET EUROPEEN

(11) **EP 3 384 144 B1**
(45) Date de publication et mention de la délivrance du brevet: **02.08.2023**
(21) Numéro de dépôt: 16805088.8
(22) Date de dépôt: 30.11.2016
(51) Int. Cl.: F02D 17/02, F02M 26/21, F02M 26/64, F02D 41/00

(54) **SYSTÈME ET PROCÉDÉ PERMETTANT DE DÉSACTIVER AU MOINS UN CYLINDRE D'UN MOTEUR, COLLECTEUR D'ADMISSION ET ÉCHANGEUR DE CHALEUR COMPRENANT LEDIT SYSTÈME**
SYSTEM UND VERFAHREN ZUM DEAKTIVIEREN MINDESTENS EINES MOTORZYLINDERS MIT EINEM IM SYSTEM ENTHALTENEN ANSAUGKRÜMMER UND WÄRMETAUSCHER.
SYSTEM AND METHOD TO DEACTIVATE AT LEAST AN ENGINE CYLINDER WITH ONE INTAKE MANIFOLD AND HEAT EXCHANGER COMPRISED IN THE SYSTEM.

(30) Priorité: 30.11.2015 FR 1561571
(43) Date de publication de la demande: 10.10.2018
(73) Titulaire: Valeo Systemes Thermiques, 78320 Le Mesnil-Saint-Denis (FR)
(72) Inventeur: ODILLARD, Laurent, 72390 LE LUART (FR)
(74) Mandataire: Valeo Systèmes Thermiques
(86) Numéro de dépôt international: PCT/EP2016/079319
(87) Numéro de publication internationale: WO 2017/093341

(56) Documents cités:
- WO-A1-2015/010903
- DE-A1- 3 044 382
- DE-A1-102013 210 597
- JP-A- 2015 110 948
- US-A- 4 320 726

## Description

La présente invention concerne le domaine des véhicules automobiles et, plus précisément, un dispositif permettant de désactiver au moins un cylindre du moteur multicylindre d'un véhicule automobile en fonctionnement.

De nos jours, au sein d'un véhicule automobile, il est connu d'utiliser un moteur multicylindre au sein duquel un ou plusieurs cylindres peuvent être désactivés lors de l'utilisation dudit moteur multicylindre. De manière habituelle, un moteur fonctionne à l'aide de plusieurs cylindres selon un cycle à quatre temps qui comprend : une étape d'admission, une étape de compression, une étape de combustion et une étape de détente ou d'échappement. Le rendement d'un cycle à quatre temps est optimal lorsque les pertes dues au transvasement des gaz au cours des phases d'admission et d'échappement dites « pertes par pompage » sont minimales.

Afin de limiter ces pertes, l'art antérieur divulgue des solutions qui permettent de désactiver un ou plusieurs cylindres lors du fonctionnement du moteur à faible charge du véhicule automobile. De manière plus générale, l'option permettant de désactiver un ou plusieurs cylindres est envisageable lorsque la puissance du moteur sollicité peut être générée par une partie seulement des cylindres disponibles au sein du moteur du véhicule automobile. Un exemple de système de l'art antérieur est illustré dans le document DE 10 2013 210597 A1.

Dans l'art antérieur, plusieurs solutions permettant de désactiver un ou plusieurs cylindres du moteur multicylindre d'un véhicule automobile sont connues. Selon une solution connue de l'art antérieur, les soupapes des cylindres à désactiver sont fixées selon une position fermée afin d'éviter l'entrée et l'expulsion desdits gaz à l'intérieur desdits cylindres qui fonctionnent comme des ressorts pneumatiques. Ainsi, il est possible de désactiver un ou plusieurs cylindres d'un moteur multicylindre d'un véhicule automobile. La puissance requise pour le moteur multicylindre est générée par les cylindres activés lorsque les soupapes des cylindres désactivés sont fermées. L'effort nécessaire à la compression des gaz présents à l'intérieur des cylindres désactivés est équivalent à la puissance fournie lors de l'étape de détente des gaz présents à l'intérieur desdits cylindres désactivés.

Un des inconvénients des systèmes connus de l'art antérieur réside dans le fait que, lors d'une partie du cycle la pression des gaz à l'intérieur des cylindres désactivés, est inférieure à la pression présente au sein du collecteur d'admission. La présence de la différence de pression engendre une aspiration des fluides, tels que de l'huile, vers l'intérieur des cylindres désactivés. Les conséquences de cette aspiration étant néfastes pour le moteur multicylindre, les cylindres sont désactivés pendant une durée limitée.

Un autre inconvénient majeur des systèmes connus de l'art antérieur réside dans le fait qu'au cours de la période de désactivation d'un ou plusieurs cylindres du moteur multicylindre d'un véhicule automobile, la température présente à l'intérieur des cylindres désactivés peut diminuer jusqu'à être inférieure à la température requise pour un fonctionnement optimal du catalyseur. Les conséquences de cette diminution de température sont également néfastes au fonctionnement optimal du moteur multicylindre.

Par conséquent, il s'avère nécessaire d'améliorer les solutions décrites ci-dessus de l'état de l'art, notamment concernant la désactivation d'un ou plusieurs cylindres d'un moteur multicylindre pour un véhicule automobile afin d'optimiser le fonctionnement dudit moteur multicylindre.

La présente invention vise à améliorer au moins l'un des inconvénients décrits ci-dessus.

Un premier objet de l'invention concerne un système pour désactiver au moins un cylindre déterminé d'un moteur multicylindre en fonctionnement, dans lequel chaque cylindre dudit moteur multicylindre comprend un conduit d'admission avec une entrée connectée au collecteur d'admission et une sortie connectée au cylindre pour permettre l'admission des gaz de combustions du collecteur d'admission vers le cylindre, le système comprenant :
- un premier moyen d'obturation amovible adapté pour obturer l'entrée dudit conduit d'admission du cylindre déterminé, le premier moyen d'obturation étant amovible entre une première position pour permettre l'admission des gaz de combustion vers ledit conduit d'admission et une deuxième position pour obturer l'admission des gaz de combustion vers ledit conduit d'admission,
- un conduit de recirculation adapté pour connecter ledit conduit d'admission dudit cylindre déterminé à une alimentation pour des gaz d'échappement,
- un deuxième moyen d'obturation amovible adapté pour obturer ledit conduit de recirculation, le deuxième moyen d'obturation étant amovible entre une première position pour obturer la communication entre ledit conduit de recirculation et l'alimentation pour des gaz d'échappement, et une deuxième position pour permettre cette communication.

Selon l'invention, le premier moyen d'obturation amovible et le deuxième moyen d'obturation amovible sont connectés pour se déplacer simultanément.

Selon l'invention, le premier moyen d'obturation amovible est connecté sur un axe de rotation pourvu d'un système d'engrenage et dans lequel le deuxième moyen d'obturation amovible est pourvu d'une crémaillère, ladite crémaillère étant en contact avec ledit système d'engrenage pour permettre au premier moyen d'obturation amovible de se déplacer entre sa première position et sa deuxième position par rotation et au deuxième moyen d'obturation amovible de se déplacer simultanément par translation entre sa première et sa deuxième position.

Selon un mode de réalisation de l'invention, le conduit de recirculation est connecté au conduit d'admission dudit cylindre déterminé avec une connexion positionnée entre l'entrée et la sortie dudit conduit d'admission.

Selon un mode de réalisation de l'invention, le premier moyen d'obturation amovible comprend un volet.

Selon un mode de réalisation de l'invention, le deuxième moyen d'obturation amovible comprend une soupape
Un deuxième objet de l'invention concerne un collecteur d'admission pour un moteur multicylindre comprenant des sorties pour connecter le collecteur d'admission aux entrées des conduits d'admission des cylindres du moteur multicylindre, dans lequel au moins une sortie dudit collecteur d'admission comprend le système selon l'invention.

Un troisième objet de l'invention concerne un échangeur de chaleur adapté pour utilisation à l'intérieur d'un collecteur d'admission pour un moteur multicylindre, ledit échangeur de chaleur comprenant des sorties pour connecter l'échangeur de chaleur aux entrées des conduits d'admission des cylindres dudit moteur multicylindre, dans lequel au moins une sortie de l'échangeur de chaleur comprend le système selon l'invention.

Un quatrième objet de l'invention concerne un procédé pour désactiver au moins un cylindre déterminé d'un moteur multicylindre en fonctionnement, dans lequel chaque cylindre dudit moteur multicylindre comprend un conduit d'admission avec une entrée connecté au collecteur d'admission et une sortie connectée au cylindre pour permettre l'admission des gaz de combustions du collecteur d'admission vers le cylindre, dans lequel l'entrée du conduit d'admission d'au moins dudit cylindre déterminé comprend un premier moyen d'obturation, ledit moyen d'obturation étant amovible entre une première position pour permettre l'admission des gaz de combustion vers le conduit d'admission et une deuxième position pour obturer l'admission des gaz de combustion vers le conduit d'admission et dans lequel le conduit d'admission d'au moins dudit cylindre déterminé est connecté au collecteur d'échappement à l'aide d'une conduit de recirculation comprenant un deuxième moyen d'obturation amovible, le deuxième moyen d'obturation amovible étant amovible entre une première position pour obturer la communication entre ledit conduit de recirculation et ledit conduit d'admission dudit cylindre déterminé et une deuxième position pour permettre cette communication, le premier moyen d'obturation amovible et le deuxième moyen d'obturation amovible étant connectés pour se déplacer simultanément, le premier moyen d'obturation amovible étant connecté sur un axe de rotation pourvu d'un système d'engrenage et le deuxième moyen d'obturation amovible étant pourvu d'une crémaillère, ladite crémaillère étant en contact avec ledit système d'engrenage pour permettre au premier moyen d'obturation amovible de se déplacer entre sa première position et sa deuxième position par rotation et au deuxième moyen d'obturation amovible de se déplacer simultanément par translation entre sa première et sa deuxième position, le procédé comprenant les étapes suivantes :
- contrôler à l'aide d'un système de contrôle la puissance du moteur multicylindre sollicité,
- comparer la puissance du moteur multicylindre sollicité avec une valeur de seuil prédéfinie,
- constater que la puissance du moteur multicylindre sollicité est au dessous le seuil prédéfini,
- déclencher le mouvement du premier moyen d'obturation vers sa deuxième position pour obturer l'admission des gaz de combustion vers le conduit d'admission du cylindre déterminé,
- déclencher le mouvement du deuxième moyen de fermeture amovible de sa première position vers sa deuxième position, pour ainsi permettre l'admission des gaz d'échappement vers le conduit d'admission du cylindre déterminé.

Les but, objet et caractéristiques de la présente invention ainsi que ses avantages apparaîtront plus clairement à la lecture de la description qui suit, des modes de réalisation préférés de l'alimentation en air d'un moteur multicylindre selon l'invention, faite en référence aux dessins dans lesquels :
- la figure 1 montre, de façon schématique, le fonctionnement d'un système permettant de désactiver au moins un cylindre d'un moteur multicylindre d'un véhicule automobile, selon la présente invention,
- la figure 2 montre un premier mode de réalisation d'un système selon l'invention comprenant un volet et d'une soupape adaptés pour obturer deux cylindres d'un moteur pourvu de quatre cylindres au sein d'un véhicule automobile, lorsque l'étape de désactivation desdits cylindres débute,
- la figure 3 montre le système comprenant un volet et une soupape lorsque l'étape de désactivation des deux cylindres est terminée, et
- la figure 4 montre une vue détaillée du système comprenant un volet et une soupape et la connexion de ce système à un moteur électrique.

Au sein de la présente description, les termes « air d'alimentation » ou « air de suralimentation » font référence à de l'air provenant du système d'admission du moteur. Ces termes peuvent également faire référence à un mélange d'air et de gaz d'échappement récupérés en sortie du moteur, conformément au système de recirculation des gaz généralement connu sous l'acronyme d'EGR (pour « Exhaust Gaz Recirculation ») dans lequel les gaz d'échappement sont issus d'un processus de combustion entre le carburant du véhicule automobile et l'air d'alimentation.

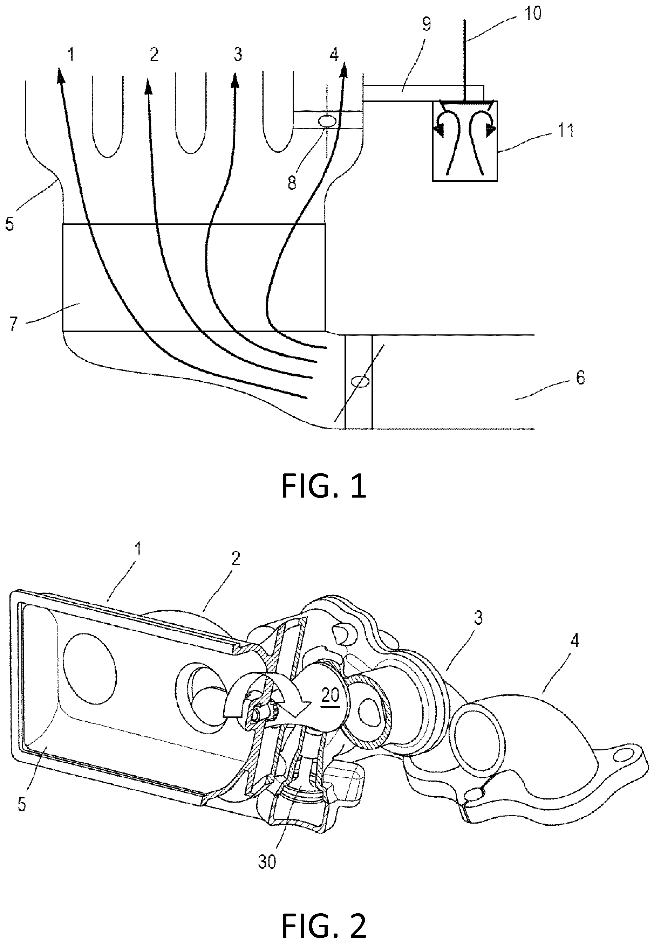

La figure 1 montre, de façon schématique, un système pour désactiver un ou plusieurs cylindres d'un moteur multicylindre d'un véhicule automobile.

La figure 1 représente une vue schématique d'un moteur pourvu de quatre cylindres indiqués 1, 2, 3, 4 connectés à un collecteur d'admission 5. Le collecteur d'admission 5 a pour fonction de guider les gaz d'admission d'une entrée 6 en direction des cylindres 1, 2, 3, 4. Le collecteur d'admission 5 peut comprendre un échangeur de chaleur 7 qui permet de diminuer la température des gaz d'admission avant leur entrée à l'intérieur des cylindres 1, 2, 3, 4. Comme montré sur la figure 1, le cylindre 4 est pourvu d'un premier moyen d'obturation en forme d'un volet 8 adapté pour se déplacer d'une première position ouverte vers une deuxième position fermée. Le volet 8 empêche l'admission des gaz en direction du cylindre 4 pendant la désactivation dudit cylindre 4. Un conduit 9 permet de connecter l'entrée du cylindre 4 à un dispositif (non montré) comprenant un deuxième moyen d'obturation en forme d'une soupape 10. La soupape 10 peut se déplacer d'une première position fermée vers une deuxième position ouverte afin de permettre la pénétration des gaz d'admission via le conduit 9 en direction du cylindre 4 (lorsque la soupape est en position ouverte). De plus, la soupape 10 communique avec une chambre 11 qui est connectée à une alimentation des gaz de recirculation telle qu'un système EGR (non montré) permettant la recirculation des gaz d'échappement. Ainsi, la chambre 11 reçoit une quantité déterminée de gaz d'échappement soumis à une pression déterminée.

Le fonctionnement du système tel que montré sur la figure 1 est comme suit : Lors de l'utilisation du moteur multicylindre d'un véhicule automobile pourvu des quatre cylindres 1, 2, 3, 4 activés, un système de contrôle (non montré) détermine si la puissance requise pour un fonctionnement normal du moteur multicylindre peut être générée par trois cylindres activés au lieu de quatre cylindres activés. Lorsque le système de contrôle valide un fonctionnement du moteur multicylindre en activant seulement trois cylindres, alors le système de contrôle commande le déclenchement de deux fonctions permettant de réaliser deux actions simultanément. Ainsi, la première fonction concerne le volet 8 qui passe d'une première position, telle que montrée sur la figure 1, vers une deuxième position permettant d'obturer l'entrée du cylindre 4. La deuxième fonction concerne la soupape 10 qui se déplace simultanément au volet afin de permettre aux gaz d'échappement d'accéder, via le conduit 9, au cylindre 4. Ainsi, dès lors que le volet 8 est fermé, les gaz d'admission ne peuvent plus pénétrer dans le cylindre 4 désactivé. Les gaz d'admission peuvent toujours pénétrer à l'intérieur des cylindres 1, 2, 3 qui restent activés. Le cylindre 4 désactivé conserve le même fonctionnement que celui des cylindres activés 1, 2, 3.

Au cours d'un cycle normal, les gaz d'admission sont en premier lieu aspirés, puis comprimés avant de subir une phase de détente et d'échappement. Au sein du cylindre 4, dès lors que le volet 8 est fermé et la soupape 10 ouverte, l'étape d'allumage peut être stoppée si nécessaire. L'étape d'allumage à l'intérieur du cylindre 4 ne produit aucune combustion ou explosion en raison de l'absence de gaz de combustion. En cas de maintien de l'allumage, aucune combustion ou explosion ne résulte de la présence de l'allumage à l'intérieur du cylindre 4, par manque de carburant.

L'effet technique résultant de la solution telle que montrée sur la figure 1 est que la pression à l'intérieur du cylindre 4 n'est, à aucun moment du cycle, inférieure à la pression présente à l'intérieur du collecteur d'admission 5. Ainsi, aucune aspiration de fluide, tel que de l'huile, n'est générée vers l'intérieur du cylindre 4. De plus, la fermeture du cylindre 4 engendre une augmentation de charge desdits cylindres activés 1, 2, 3. Ainsi, pour les cylindres 1, 2, 3 la température augmente. De manière simultanée, les gaz d'échappement chauds recirculés s'écoulent au sein du conduit 9. Par conséquent, la combinaison de l'augmentation de la température des gaz brûlés des cylindres activés 1, 2, 3 et l'écoulement des gaz d'échappement chauds recirculés permet de conserver une température moteur au-dessus de la température de fonctionnement optimal du catalyseur ou température de light-off.

Le principe de fonctionnement, tel que décrit en référence à la figure 1, peut s'appliquer à tout type d'alimentation en air destiné à des véhicules automobiles, plus particulièrement aux véhicules automobiles comprenant un moteur multicylindre à allumage commandé c'est-à-dire un moteur à essence ou à allumage par compression c'est-à-dire un moteur diesel. L'utilisation du principe de désactivation d'au moins un cylindre peut s'appliquer à un moteur de type « suralimenté » ou « atmosphérique ».

La solution selon la présente invention peut également être intégrée au sein d'un moteur turbocompressé. Afin d'augmenter la densité de l'air d'admission d'un tel moteur (non montré), il est connu de refroidir l'air de suralimentation sortant du compresseur au moyen d'un échangeur de chaleur, tel que l'échangeur de chaleur 7, montré sur la figure 1, également dénommé refroidisseur d'air de suralimentation (RAS). Le refroidissement de l'air de suralimentation a pour objectif d'améliorer la combustion à l'intérieur des cylindres. Dans certaines applications, l'échangeur de chaleur 7 présente la particularité d'intégrer la fonction de collecteur d'admission du moteur à combustion interne. Dans cette situation, l'échangeur de chaleur 7 est alors fixé directement sur la culasse.

La figure 2 montre un premier mode de réalisation de l'ensemble composé d'un volet 20 et d'une soupape 30. La figure 2 montre également une partie de la sortie du collecteur d'admission 5 ainsi que les conduits d'admission permettant à l'air de pénétrer et de circuler en direction des cylindres 1, 2, 3, 4. Selon le mode de réalisation montré sur la figure 2, le volet 20 est positionné de manière centrée entre les conduits d'admission en direction des cylindres 2, 3. La figure 2 montre le volet 20 se déplaçant d'une première position vers une deuxième position selon la direction de la flèche. Dans sa première position, le volet 20 ne bloque aucun conduit d'admission.

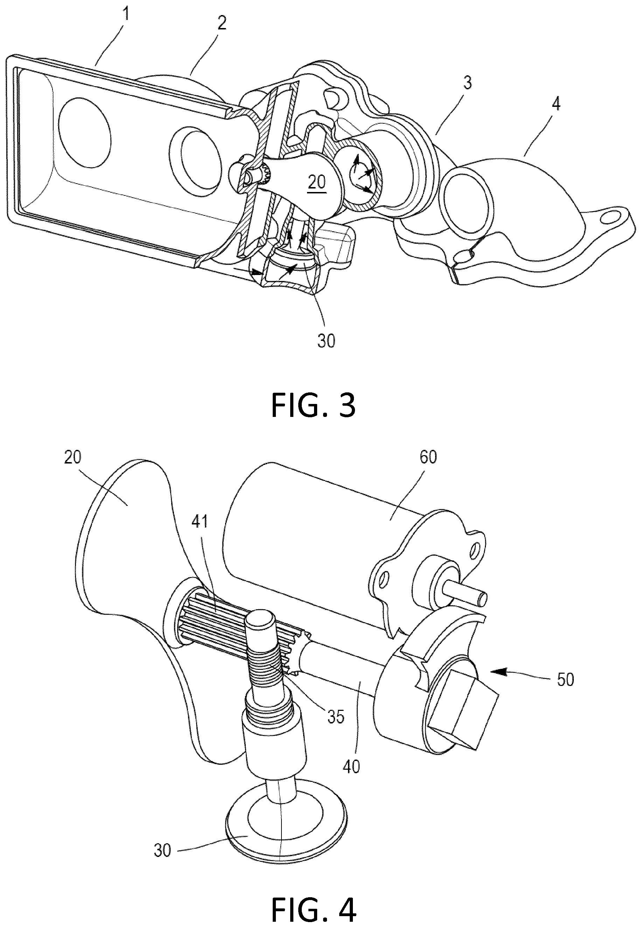

La figure 3 montre la deuxième position du volet 20, ladite position étant adaptée pour obturer les conduits d'admission des cylindres 2, 3. De façon simultanée, la soupape 30 se déplace d'une première position fermée vers une deuxième position ouverte afin de permettre aux gaz d'échappement de circuler au travers de ladite soupape 30 en direction des conduits d'admission des cylindres 2, 3.

Les exemples, tels que montrés sur les figures 2 et 3, représentent des cylindres désactivés comportant un volet 20 unique. La solution montrée sur les figures 2, 3 permet une désactivation de deux cylindres grâce à des pièces simples et peu coûteuses. La désactivation de deux cylindres adjacents garantit la stabilité du moteur multicylindre.

La figure 4 montre en détail l'ensemble composé du volet 20 et de la soupape 30. Le volet 20 est monté sur l'extrémité d'un axe de rotation 40 pourvu d'un système d'engrenage 41. La soupape 30 est positionnée de manière à être en contact, sur l'axe de rotation 40, avec le système d'engrenage 41, grâce à une crémaillère 35. La deuxième extrémité de l'axe de rotation 40 comprend une couronne 50 munie d'un ressort de rappel. La couronne 50 est en contact avec un moteur 60 utilisé pour le déplacement de l'ensemble composé du volet 20 et de la soupape 30. En pratique, le moteur 60 est contrôlé à l'aide d'un dispositif de contrôle (non montré). Le dispositif de contrôle détermine si un ou plusieurs cylindres du moteur multicylindre du véhicule automobile considéré doivent être désactivés ou réactivés. Une commande est ensuite générée afin de faire fonctionner le moteur. Le moteur étant en contact avec la couronne 50, ladite couronne 50 se déplace d'une première position vers une deuxième position. Le déplacement de la couronne 50 entraîne une rotation de l'axe 40. Le volet 20, directement fixé sur l'axe de rotation 40, se déplace avec l'axe de rotation 40. Grâce à la combinaison du système d'engrenage 41 sur l'axe de rotation 40 et de la crémaillère 35 sur la soupape 30, ladite soupape 30 se déplace simultanément à la rotation du volet 20.

En pratique, le mouvement du volet 20 et de la soupape 30, d'une première position désactivée permettant l'utilisation de tous les cylindres, vers une deuxième position fermée telle que montrée sur la figure 3, représente une durée d'une ou plusieurs millisecondes. De manière préférée, la durée du déplacement du volet 20 en combinaison avec la soupape 30 coïncide avec la durée de rotation de deux tours du vilebrequin (non montré) du véhicule automobile.

Selon un mode de réalisation particulier, l'invention concerne un collecteur d'admission dans lequel le système pour désactiver au moins un cylindre selon l'invention est intégré.

Selon un mode de réalisation alternatif de l'invention, le système pour désactiver au moins un cylindre est intégré dans un échangeur de chaleur.

## Revendications

1. Système pour désactiver au moins un cylindre (1, 2, 3, 4) déterminé d'un moteur multicylindre en fonctionnement, dans lequel chaque cylindre (1, 2, 3, 4) dudit moteur multicylindre comprend un conduit d'admission avec une entrée connectée au collecteur d'admission (5) et une sortie connectée au cylindre (1, 2, 3, 4) pour permettre l'admission des gaz de combustions du collecteur d'admission (5) vers le cylindre (1, 2, 3, 4), le système comprenant :
- un premier moyen d'obturation amovible (8, 20) adapté pour obturer l'entrée dudit conduit d'admission du cylindre (1, 2, 3, 4) déterminé, le premier moyen d'obturation (8, 20) étant amovible entre une première position pour permettre l'admission des gaz de combustion vers ledit conduit d'admission et une deuxième position pour obturer l'admission des gaz de combustion vers ledit conduit d'admission,
- un conduit de recirculation (9) adapté pour connecter ledit conduit d'admission dudit cylindre (1, 2, 3, 4) déterminé à une alimentation pour des gaz d'échappement,
- un deuxième moyen d'obturation amovible (10, 30) adapté pour obturer ledit conduit de recirculation (9), le deuxième moyen d'obturation (10, 30) étant amovible entre une première position pour obturer la communication entre ledit conduit de recirculation (9) et l'alimentation pour des gaz d'échappement, et une deuxième position pour permettre cette communication, **caractérisé en ce que** le premier moyen d'obturation amovible (8, 20) et le deuxième moyen d'obturation amovible (10, 30) sont connectés pour se déplacer simultanément, le premier moyen d'obturation amovible (8, 20) étant connecté sur un axe de rotation pourvu d'un système d'engrenage et le deuxième moyen d'obturation amovible (10, 30) étant pourvu d'une crémaillère, ladite crémaillère étant en contact avec ledit système d'engrenage pour permettre au premier moyen d'obturation amovible (8, 20) de se déplacer entre sa première position et sa deuxième position par rotation et au deuxième moyen d'obturation amovible (10, 30) de se déplacer simultanément par translation entre sa première et sa deuxième position.

2. Système selon la revendication 1, dans lequel le conduit de recirculation (9) est connecté au conduit d'admission dudit cylindre (1, 2, 3, 4) déterminé avec une connexion positionnée entre l'entrée et la sortie dudit conduit d'admission.

3. Système selon l'une des revendications 1 ou 2, dans lequel le premier moyen d'obturation amovible (8, 20) comprend un volet.

4. Système selon l'une des revendications 1 à 3, dans lequel le deuxième moyen d'obturation amovible (10, 30) comprend une soupape.

5. Collecteur d'admission pour un moteur multicylindre comprenant des sorties pour connecter le collecteur d'admission aux entrées des conduits d'admission des cylindres (1, 2, 3, 4) du moteur multicylindre, dans lequel au moins une sortie dudit collecteur d'admission comprend le système selon l'une des revendications 1 à 4.

6. Echangeur de chaleur adapté pour une utilisation à l'intérieur d'un collecteur d'admission pour un moteur multicylindre, ledit échangeur de chaleur comprenant des sorties pour connecter l'échangeur de chaleur aux entrées des conduits d'admission des cylindres (1, 2, 3, 4) dudit moteur multicylindre, dans lequel au moins une sortie de l'échangeur de chaleur comprend le système selon l'une des revendications 1 à 4.

7. Procédé pour désactiver au moins un cylindre (1, 2, 3, 4) déterminé d'un moteur multicylindre en fonctionnement, dans lequel chaque cylindre (1, 2, 3, 4) dudit moteur multicylindre comprend un conduit d'admission avec une entrée connectée au collecteur d'admission (5) et une sortie connectée au cylindre (1, 2, 3, 4,) pour permettre l'admission des gaz de combustion du collecteur d'admission (5) vers le cylindre (1, 2, 3, 4), dans lequel l'entrée du conduit d'admission d'au moins dudit cylindre (1, 2, 3, 4) déterminé comprend un premier moyen d'obturation (8, 20), ledit moyen d'obturation (8, 20) étant amovible entre une première position pour permettre l'admission des gaz de combustion vers le conduit d'admission et une deuxième position pour obturer l'admission des gaz de combustion vers le conduit d'admission et dans lequel le conduit d'admission d'au moins dudit cylindre (1, 2, 3, 4) déterminé est connecté au collecteur d'échappement à l'aide d'un conduit de recirculation (9) comprenant un deuxième moyen d'obturation amovible (10, 30), le deuxième moyen d'obturation amovible (10, 30) étant amovible entre une première position pour obturer la communication entre ledit conduit de recirculation (9) et ledit conduit d'admission dudit cylindre (1, 2, 3, 4, 5) déterminé et une deuxième position pour permettre cette communication, le premier moyen d'obturation amovible (8, 20) et le deuxième moyen d'obturation amovible (10, 30) étant connectés pour se déplacer simultanément,
le premier moyen d'obturation amovible (8, 20) étant connecté sur un axe de rotation pourvu d'un système d'engrenage et le deuxième moyen d'obturation amovible (10, 30) étant pourvu d'une crémaillère, ladite crémaillère étant en contact avec ledit système d'engrenage pour permettre au premier moyen d'obturation amovible (8, 20) de se déplacer entre sa première position et sa deuxième position par rotation et au deuxième moyen d'obturation amovible (10, 30) de se déplacer simultanément par translation entre sa première et sa deuxième position le procédé comprenant les étapes suivantes :
- contrôler à l'aide d'un système de contrôle la puissance du moteur multicylindre sollicité,
- comparer la puissance du moteur multicylindre sollicité avec une valeur de seuil prédéfinie,
- constater que la puissance du moteur multicylindre sollicité est en-dessous du seuil prédéfini,
- déclencher le mouvement du premier moyen d'obturation (8, 20) vers sa deuxième position pour obturer l'admission des gaz de combustion vers le conduit d'admission du cylindre déterminé,
- déclencher le mouvement du deuxième moyen de fermeture amovible (10, 30) de sa première position vers sa deuxième position, pour ainsi permettre l'admission des gaz d'échappement vers le conduit d'admission du cylindre (1, 2, 3, 4) déterminé.

## Patentansprüche

1. System zum Deaktivieren mindestens eines bestimmten Zylinders (1, 2, 3, 4) eines mehrzylindrigen Motors während des Betriebs, wobei jeder Zylinder (1, 2, 3, 4) des mehrzylindrigen Motors eine Einlassleitung mit einem Eingang, der mit dem Ansaugkrümmer (5) verbunden ist, und einem Ausgang, der mit dem Zylinder (1, 2, 3, 4) verbunden ist, beinhaltet, um den Einlass der Verbrennungsgase des Ansaugkrümmers (5) in den Zylinder (1, 2, 3, 4) zu gestatten, wobei das System Folgendes beinhaltet:
- ein erstes bewegbares Verschlussmittel (8, 20), das dazu angepasst ist, den Eingang der Einlassleitung des bestimmten Zylinders (1, 2, 3, 4) zu verschließen, wobei das erste Verschlussmittel (8, 20) zwischen einer ersten Stellung, um den Einlass der Verbrennungsgase in die Einlassleitung zu gestatten, und einer zweiten Stellung, um den Einlass der Verbrennungsgase in die Einlassleitung zu verschließen, bewegbar ist,
- eine Rückführleitung (9), die dazu angepasst ist, die Einlassleitung des bestimmten Zylinders (1, 2, 3, 4) mit einer Zufuhr für Abgase zu verbinden,
- ein zweites bewegbares Verschlussmittel (10, 30), das dazu angepasst ist, die Rückführleitung (9) zu verschließen, wobei das zweite Verschlussmittel (10, 30) zwischen einer ersten Stellung, um die Kommunikation zwischen der Rückführleitung (9) und der Zufuhr für Abgase zu verschließen, und einer zweiten Stellung, um diese Kommunikation zu gestatten, bewegbar ist,
**dadurch gekennzeichnet, dass** das erste bewegbare Verschlussmittel (8, 20) und das zweite bewegbare Verschlussmittel (10, 30) verbunden sind, um sich simultan zu bewegen, wobei das erste bewegbare Verschlussmittel (8, 20) mit einer Rotationsachse, die über ein Zahnradsystem verfügt, verbunden ist und das zweite bewegbare Verschlussmittel (10, 30) über eine Zahnstange verfügt, wobei die Zahnstange mit dem Zahnradsystem in Kontakt ist, um es dem ersten bewegbaren Verschlussmittel (8, 20) zu gestatten, sich durch Rotation zwischen seiner ersten Stellung und seiner zweiten Stellung zu bewegen, und es dem zweiten bewegbaren Verschlussmittel (10, 30) zu gestatten, sich simultan durch Translation zwischen seiner ersten und seiner zweiten Stellung zu bewegen.

2. System nach Anspruch 1, wobei die Rückführleitung (9) durch eine Verbindung, die zwischen dem Eingang und dem Ausgang der Einlassleitung positioniert ist, mit der Einlassleitung des bestimmten Zylinders (1, 2, 3, 4) verbunden ist.

3. System nach einem der Ansprüche 1 oder 2, wobei das erste bewegbare Verschlussmittel (8, 20) eine Klappe beinhaltet.

4. System nach einem der Ansprüche 1 bis 3, wobei das zweite bewegbare Verschlussmittel (10, 30) ein Ventil beinhaltet.

5. Ansaugkrümmer für einen mehrzylindrigen Zylinder, der Ausgänge beinhaltet, um den Ansaugkrümmer mit den Eingängen der Einlassleitungen der Zylinder (1, 2, 3, 4) des mehrzylindrigen Motors zu verbinden, wobei mindestens ein Ausgang des Ansaugkrümmers das System nach einem der Ansprüche 1 bis 4 beinhaltet.

6. Wärmetauscher, der für eine Verwendung im Inneren eines Ansaugkrümmers für einen mehrzylindrigen Motor angepasst ist, wobei der Wärmetauscher Ausgänge beinhaltet, um den Wärmetauscher mit den Eingängen der Einlassleitungen der Zylinder (1, 2, 3, 4) des mehrzylindrigen Motors zu verbinden, wobei mindestens ein Ausgang des Wärmetauschers das System nach einem der Ansprüche 1 bis 4 beinhaltet.

7. Verfahren zum Deaktivieren mindestens eines bestimmten Zylinders (1, 2, 3, 4) eines mehrzylindrigen Motors während des Betriebs, wobei jeder Zylinder (1, 2, 3, 4) des mehrzylindrigen Motors eine Einlassleitung mit einem Eingang, der mit dem Ansaugkrümmer (5) verbunden ist, und einem Ausgang, der mit dem Zylinder (1, 2, 3, 4) verbunden ist, beinhaltet, um den Einlass der Verbrennungsgase des Ansaugkrümmers (5) in den Zylinder (1, 2, 3, 4) zu gestatten, wobei der Eingang der Einlassleitung mindestens des bestimmten Zylinders (1, 2, 3, 4) ein erstes Verschlussmittel (8, 20) beinhaltet, wobei das Verschlussmittel (8, 20) zwischen einer ersten Stellung, um den Einlass der Verbrennungsgase in die Einlassleitung zu gestatten, und einer zweiten Stellung, um den Einlass der Verbrennungsgase in die Einlassleitung zu verschließen, bewegbar ist und wobei die Einlassleitung mindestens des bestimmten Zylinders (1, 2, 3, 4) mit Hilfe einer Rückführleitung (9), die ein zweites bewegbares Verschlussmittel (10, 30) beinhaltet, mit dem Abgaskrümmer verbunden ist,
wobei das zweite bewegbare Verschlussmittel (10, 30) zwischen einer ersten Stellung, um die Kommunikation zwischen der Rückführleitung (9) und der Einlassleitung des bestimmten Zylinders (1, 2, 3, 4, 5) zu verschließen, und einer zweiten Stellung, um diese Kommunikation zu gestatten, bewegbar ist, wobei das erste bewegbare Verschlussmittel (8, 20) und das zweite bewegbare Verschlussmittel (10, 30) verbunden sind, um sich simultan zu bewegen,
wobei das erste bewegbare Verschlussmittel (8, 20) mit einer Rotationsachse, die über ein Zahnradsystem verfügt, verbunden ist und das zweite bewegbare Verschlussmittel (10, 30) über eine Zahnstange verfügt, wobei die Zahnstange mit dem Zahnradsystem in Kontakt ist, um es dem ersten bewegbaren Verschlussmittel (8, 20) zu gestatten, sich durch Rotation zwischen seiner ersten Stellung und seiner zweiten Stellung zu bewegen, und es dem zweiten bewegbaren Verschlussmittel (10, 30) zu gestatten, sich simultan durch Translation zwischen seiner ersten und seiner zweiten Stellung zu bewegen,
wobei das Verfahren die folgenden Schritte beinhaltet:
- Steuern, mit Hilfe eines Steuersystems, der Leistung des mehrzylindrigen Motors unter Last,
- Vergleichen der Leistung des mehrzylindrigen Motors unter Last mit einem vordefinierten Schwellenwert,
- Feststellen, dass die Leistung des mehrzylindrigen Motors unter Last unterhalb der vordefinierten Schwelle liegt,
- Auslösen der Bewegung des ersten Verschlussmittels (8, 20) in seine zweite Stellung, um den Einlass der Verbrennungsgase in die Einlassleitung des bestimmten Zylinders zu verschließen,
- Auslösen der Bewegung des zweiten bewegbaren Verschlussmittels (10, 30) von seiner ersten Stellung in seine zweite Stellung, um so den Einlass der Abgase in die Einlassleitung des bestimmten Zylinders (1, 2, 3, 4) zu gestatten.

## Claims

1. System for deactivating at least one determined cylinder (1, 2, 3, 4) of an operational multicylinder engine, wherein each cylinder (1, 2, 3, 4) of said multicylinder engine comprises an intake duct with an inlet connected to the intake manifold (5) and an outlet connected to the cylinder (1, 2, 3, 4) in order to allow the intake of the combustion gases from the intake manifold (5) towards the cylinder (1, 2, 3, 4), the system comprising:
- a first movable shut-off means (8, 20) designed to shut off the inlet of said intake duct of the determined cylinder (1, 2, 3, 4), the first shut-off means (8, 20) being movable between a first position for allowing the intake of the combustion gases towards said intake duct and a second position for shutting off the intake of the combustion gases towards said intake duct,
- a recirculation duct (9) designed to connect said intake duct of said determined cylinder (1, 2, 3, 4) to a supply for exhaust gases,
- a second movable shut-off means (10, 30) designed to shut off said recirculation duct (9), the second shut-off means (10, 30) being movable between a first position for shutting off the communication between said recirculation duct (9) and the supply for exhaust gases, and a second position for allowing this communication, **characterized in that** the first movable shut-off means (8, 20) and the second movable shut-off means (10, 30) are connected in order to move simultaneously, the first movable shut-off means (8, 20) being connected to a rotation shaft provided with a gear system and the second movable shut-off means (10, 30) being provided with a rack, said rack being in contact with said gear system to allow the first movable shut-off means (8, 20) to move between its first position and its second position by rotation, and to allow the second movable shut-off means (10, 30) to move simultaneously by translation between its first and its second position.

2. System according to Claim 1, wherein the recirculation duct (9) is connected to the intake duct of said determined cylinder (1, 2, 3, 4) with a connection positioned between the inlet and the outlet of said intake duct.

3. System according to either of Claims 1 and 2, wherein the first movable shut-off means (8, 20) comprises a flap.

4. System according to one of Claims 1 to 3, wherein the second movable shut-off means (10, 30) comprises a valve.

5. Intake manifold for a multicylinder engine comprising outlets for connecting the intake manifold to the inlets of the intake ducts of the cylinders (1, 2, 3, 4) of the multicylinder engine, wherein at least one outlet of said intake manifold comprises the system according to one of Claims 1 to 4.

6. Heat exchanger designed for use inside an intake manifold for a multicylinder engine, said heat exchanger comprising outlets for connecting the heat exchanger to the inlets of the intake ducts of the cylinders (1, 2, 3, 4) of said multicylinder engine, wherein at least one outlet of the heat exchanger comprises the system according to one of Claims 1 to 4.

7. Method for deactivating at least one determined cylinder (1, 2, 3, 4) of an operational multicylinder engine, wherein each cylinder (1, 2, 3, 4) of said multicylinder engine comprises an intake duct with an inlet connected to the intake manifold (5) and an outlet connected to the cylinder (1, 2, 3, 4) in order to allow the intake of the combustion gases from the intake manifold (5) towards the cylinder (1, 2, 3, 4), wherein the inlet of the intake duct of at least said determined cylinder (1, 2, 3, 4) comprises a first shut-off means (8, 20), said shut-off means (8, 20) being movable between a first position for allowing the intake of the combustion gases towards the intake duct and a second position for shutting off the intake of the combustion gases towards the intake duct, and wherein the intake duct of at least said determined cylinder (1, 2, 3, 4) is connected to the exhaust manifold by means of a recirculation duct (9) comprising a second movable shut-off means (10, 30), the second movable shut-off means (10, 30) being movable between a first position for shutting off the communication between said recirculation duct (9) and said intake duct of said determined cylinder (1, 2, 3, 4, 5) and a second position for allowing this communication, the first movable shut-off means (8, 20) and the second movable shut-off means (10, 30) being connected in order to move simultaneously,
the first movable shut-off means (8, 20) being connected to a rotation shaft provided with a gear system and the second movable shut-off means (10, 30) being provided with a rack, said rack being in contact with said gear system to allow the first movable shut-off means (8, 20) to move between its first position and its second position by rotation, and to allow the second movable shut-off means (10, 30) to move simultaneously by translation between its first and its second position, the method comprising the following steps:
- monitoring the power of the multicylinder engine that is acted upon, by means of a monitoring system,
- comparing the power of the multicylinder engine that is acted upon with a predefined threshold value,
- establishing that the power of the multicylinder engine that is acted upon lies below the predefined threshold,
- triggering the movement of the first shut-off means (8, 20) towards its second position in order to shut off the intake of the combustion gases towards the intake duct of the determined cylinder,
- triggering the movement of the second movable closing means (10, 30) from its first position towards its second position, in order to thus allow the intake of the exhaust gases towards the intake duct of the determined cylinder (1, 2, 3, 4).
